# EUROPEAN PATENT APPLICATION

(11) **EP 1 183 952 A1**
(43) Date of publication of application: **06.03.2002**
(21) Application number: 01307525.4
(22) Date of filing: 04.09.2001
(51) Int. Cl.: A23K 1/02, A23K 1/14, A23K 1/18

(54) **Moist molassed beet pulp, the use thereof and a method for producing the same**

(30) Priority: 05.09.2000 GB 0021704
(71) Applicant: PROVIMI HOLDING B.V., 3072 AN Rotterdam (NL)
(72) Inventor: Van Wesel, Adreanus Augustinus Maria, 4921 ET Made (NL); Wong, Emile, 1050 Bruxelles (BE)
(74) Representative: Wilkinson, Stephen John

(57) **Abstract**

The present invention discloses a moist molassed beet pulp composition and the use of such a composition. The moist molassed beet pulp of the present invention is used for feeding monogastric animals, such as swine and calves preferably suckling piglets. This results in a significant increase in intake of prestarter, higher weight gains and less scour problems. The present invention also discloses a process for the production of molassed beet pulp.

## Description

### Technical field

The present invention discloses a moist molassed beet pulp composition and the use of such a composition, The moist molassed beet pulp of the present invention is used as feed for piglets, this results in an increased intake of prestarter, such an effect is especially important when piglets are receiving moist molassed beet pulp shortly after birth. The present invention also discloses a process for the production of moist molassed beet pulp

### Background of the invention

In the past it was common to supply compost to suckling piglets to fulfil the iron need of the piglets. This practice is nowadays not longer necessary because the iron need is covered by an iron injection. On the other hand the compost has other nutritive effects when supplemented with organic acids and trace elements. A compost-based product is currently available under the trade name Compostart®. This product has probiotic effects and contains fibres, which have a toxin binding effect. In addition this composition has an anti-bacterial effect because of its low pH of about 2.5. Due to the natural rooting behaviour of pigs, compost will be readily ingested. By presenting this composition next to the feed, the piglets are familiarised with solid feed intake, which results in an increased prestarter uptake. Supply of this product during the first weeks of life stimulates feed intake of the piglets during the suckling period.
Compostart is a composition, which is used to familiarise the piglets with solid feed and it includes peat. The use of compositions based on peat has recently come under investigation. Peat, which is lying on the land for some time may be contaminated with (avian) para-tuberculosis and therefore the use of peat has become questionable. There is thus a need for a feed component, which can replace compost or compost-based compositions and which shows at least all the advantages of the compost without the risk of spreading (avian) para-tuberculosis. The present invention discloses such a product.

### Summary of the invention

The present invention discloses a feed product, which is a moist molassed beet pulp. The moist molassed beet pulp contains fibres, is acidifying and stimulates the uptake of prestarter when fed to sucklings starting just after birth. The moist molassed beet pulp has the following composition; 40 to 80 % (w/w) beet pulp, 20 to 60 % (w/w) molasses and 35 to 60% dry matter. Preservatives are added when needed, such preservatives are for example organic acids. The present invention also discloses a method for obtaining the molassed beet pulp. This method comprises the mixing of molasses and beet pulp and- pressing of the mixture. Finally, some additives may be added. The molassed beet pulp is prepared in the following manner the pressed pulp is mixed to molasses at a desired ratio such as for example between I : 0.2 and I : 2 preferably of I : 0.4 (w/w). The mixture is then pressed to a final product. The press water is concentrated and recycled. The present invention further discloses the use of the moist molassed beet pulp for feeding monogastric animals, preferably swine and calves more preferably the feeding of piglets just after birth.

When fed to piglets the piglets will consume significantly more pre-starter, have higher weight gains and have less scours problems. Preferably the moist molassed beet pulp is added to the feed or offered separately at free choice.

### Detailed description of the invention

The present invention discloses a feed product, which is a moist molassed beet pulp. The moist molassed beet pulp contains fibres, is acidifying and stimulates the uptake of prestarter when fed to suckling starting just after birth. The beet pulp and molasses are mixed in such a ratio that the final product contains from about 20 to about 60 % molasses (w/w, dry matter) preferably from 30 to 50%, more preferably from 35 to 45 %.

The present invention also discloses a method for obtaining the moist molassed beet pulp. This method comprises the mixing of molasses and beet pulp and pressing of the mixture. Finally, some additives such as organic acids may be added. Molasses, which can be used in the present invention are from sugar factories or refineries. The beet pulp is the left-over of the sugar beet after sugar extraction, which may be dried by pressing, before further processing. The mixture is prepared by mechanical mixing for example in an extruder, other similar mixers may be used.
The mixture can be very easily prepared by adding molasses in the transportation screw of the beet pulp. After mixing the mixture is pressed to a desired water content.

Furthermore, additives are added if needed. The additives may be added at the beginning or they may be added during mixing. It is also possible to add the additives after pressing. Additionally there is at least other ingredient which may be added; an organic acid. Such an acid is added to prevent fermentation and mould formation. The final product is a semi-dehydrated pulp. The dry matter is between 35 and 60 %, preferably, between 40 and 50 %.

Just after birth piglets are only receiving mother milk. It is only after some time that the digestive tract is adapted to the intake and digestion of solid feed. In order to develop the digestive tract at an earlier stage and so make the use of solid feed possible at an earlier stage naturally occurring peat or compost based compositions such as Compostart are regularly used. The moist molassed beet pulp of the present invention was found to be easy to make and several methods are available to do so.
The present invention shows that it is possible to extend the use of solid feed to very early life stages of animals. The moist molassed beet pulp is preferably given to piglets having a weight of below about 15 kg. It is given either in separate form or mixed with the normal diet. This is what we mean by stating that it is a complementary feed. The most notable advantageous effects have been found when given to the piglets before weaning that is before the animals have reached a weight of about 8 kg.
In order to make the transition to solid feed more smooth it appeared to be possible to use the molassed beet pulp with prestarter and wherein the relative amount of moist molassed beet pulp to prestarter is gradually diminished until weaning. It would be possible to start with for example 75% moist molassed beet pulp and 25% prestarter and to gradually diminish the beet pulp until only prestarter is given.

Apart from the use of the moist molassed beet pulp for feeding piglets it was also found that the product could be used as feed or feed ingredient for calves. In such a case the feed was given for its nutritional value.

In addition when comparing the moist molassed beet pulp with Compostart several things were found.
It was first found that when these compositions were added to the food starting at piglet age of 3 days the Compostart and moist molassed beet pulp were eaten. It was then found that the amount of prestarter taken after day 11 was significantly increased when moist molassed beet pulp was used instead of Compostart (Example 2).
In addition there was an effect on the health of the animals. There were less occurrence of diarrhea during the lactation period. At weaning when piglets have to change to solid feed the animals develop stress and this results in a negative effect on food uptake and digestion. Animals show diverse illness symptoms for a few days in which period they do not grow. Following uptake of moist molassed beet pulp during early stages of life it was found that the stress of the animals was reduced at weaning resulting in a more continues growth and feed intake.

The present invention further discloses feeding of piglets just after birth with the moist molassed beet pulp. When fed to piglets the piglets will consume significantly more prestarter, which resulted in better performance which was still present at a later growth stage.

The present invention is illustrated by the following non-limiting examples.

### Examples

### Example 1

### Process for producing molassed beet pulp

Pressed beet pulp (22-30% dry matter) was mixed with molasses (75-85% dry matter) in a ratio of I : 0.4 (w/w). The mixture was then pressed in a mono-screw press. The water, of beet pulp was easily extracted by osmotic pressure differences between pulp and molasses. The press water, at the range of 33 to 40' Brix was recycled. The pressed pulp was dehydrated to 44-50% dry matter. The molasses content of the product was about 35% on dry matter basis.

### Example 2

### Comparison of Compostart® and moist molassed beet pulp in piglet feeding trials

To eliminate possible maternal effects during the experiment, a Swop set up was used. The experiment was performed as follows. At day 3 (start of the test), 12 sows with their litter were divided into two groups of similar parity and day of farrowing. Litters of two opposite placed sows were mixed and evenly distributed over two groups, similar in origin, sex, weight and number. Until weaning, starting from day 3 the adjusted litters were swopped together with their feed, whilst the sows remained in their farrowing pens. From day 3 until day 27 the litters received Compostart or moist molassed beet pulp. From day 11 the piglets also received pelleted prestarter feed Prestarter. The pellets were 2 mm and contained 40 ppm tylosin. During the whole period piglets had access to mother milk ad lib. The results of these experiments are summarized in the following table:

| | Moist molassed beet pulp | Compostart | Sign |
|---|---|---|---|
| Birth weight, kg | 1.43 | 1.44 | |
| Start weight, kg | 2.13 | 2.13 | |
| Weaning weight (day 27) | 8.63 | 8.43 | |
| Prestarter intake/piglet (g) (day 11 - day 27) | 203 | 106 | P<0.08 |
| Compostart or moist molassed beet pulp intake/piglet (g) | 403 | 391 | |

Piglets fed with supplemented moist molassed beet pulp, tended to consume more prestarter from day 11 until weaning, compared with piglets fed with supplemented Compostart.

### Example 3

### Evaluation of moist molassed beet pulp in a conventional prestarter program

Approximately 120 piglets from 12 sows were allocated to one of four treatment groups. The trial was done on piglets from 10 to 28 days of age.
The four treatments differed in the supply of feed and/or moist molassed beet pulp to the piglets during the trial period.
The data were analysed using a general linear model technique to adjust for any differences in 3 day weights, weaning age and piglets per litter suckled.

| | Prestarter | Prestarter + moist molassed beet pulp | moist molassed beet pulp | no added feed |
|---|---|---|---|---|
| weaning weights, kg | 8.49 | 8.51 | 8.62 | 7.48 |
| daily gain, kg/d (3 days to weaning) | 0.246 | 0.227 | 0.246 | 0.213 |
| adjusted mean weaning weights, kg | 8.72 | 8.25 | 8.40 | 7.70 |
| mean daily gains to weaning, kg | 0.252 | 0.236 | 0.237 | 0.209 |

The results described in the above table indicate that the use of moist molassed beet pulp is a viable alternative to the use of a conventional prestarter feed program.

The use of prestarter gave a 13% advantage in weaning weight over controls given no supplementary feed and the moist molassed beet pulp gave a 15% advantage over the negative controls given no supplementary feed.

### Example 4

### Effect of moist molassed beet pulp in the post-weaning stage

The objective of the current study was to investigate whether supplying moist molassed beet pulp together with a prestarter diet will increase feed intake in the suckling phase and whether this effect is carried over in the first two days post-weaning, when moist molassed beet pulp is mixed with the prestarter diet.

The study was conducted using 8 sows, which were divided into 4 pairs of 2 sows, so called SWOP-pairs. Litters within a SWOP-pair were divided equally by weight, sex and ancestry. One of the two treatments, either Prestarter (control) or Prestarter in combination with moist molassed beet pulp, in separate bowls, were assigned to the litters within a pair. Litters were exchanged between sows daily to exclude sow effects.

Moist molassed beet pulp was fed until day 19 of age (8 days before weaning). From day 0-2 post-weaning the moist molassed beet pulp group received a mixture of 1/3 moist molassed beet pulp and 2/3 prestarter diet. During these days feed intake was recorded.

| | Moist molassed beet pulp + prestarter | Average | Prestarter | Contrast |
|---|---|---|---|---|
| daily gain (birth-start), gr | | 196 | | |
| daily gain (start-weaning), gr | | 290 | | |
| Sow feed intake, kg | | 5.1 | | |
| Sow parity | | 4.4 | | |
| Prestarter consumption, g/piglet | 647 | | 827 | |
| Moist molassed beet pulp, g/piglet | 127 | | - | |
| Total intake, g/piglet (93 % DM) | 746 | | 827 | 0.67 |
| Daily gain, g/piglet | 293 | | 297 | 0.88 |
| Daily feed intake during day 0-2 post weaning, g/pig/day | 217 | | 186 | 0.12 |
| Average daily gain day 0-12 post weaning, g/pig | 351 | | 328 | 0.03 |

From the results of this period it can be concluded that feeding moist molassed beet pulp in a separate bowl next to a prestarter diet does not suppress prestarter intake compared to the control diet. However, when moist molassed beet pulp was suddenly withdrawn the piglets seem to loose interest in the prestarter diet, as well.

In practice, the product is mixed with the prestarter diet and gradually withdrawn, which makes the transition much smoother.

Feeding 1/3 moist molassed beet pulp and 2/3 prestarter diet in the first two days post-weaning resulted in a numerical increase of DM intake, but differences were not significant However, feeding the mixture did result in a significant increase of daily gain for the moist molassed beet pulp group in the first 12 days post-weaning,

## Claims

1. Use of moist molassed beet pulp as complementary feed for piglets weighing less than 15 kgs.

2. Use of moist molassed beet pulp according to claim 1 as complementary feed for piglets before weaning, i.e until the animals have reached a weight of about 8 kg.

3. Use of moist molassed beet pulp according to claim 1 together with prestarter wherein the relative amount of moist molassed beet pulp to prestarter is gradually diminished during lactation until post weaning at the latest.

4. Use of moist molassed beet pulp as feed or feed ingredient for calves.

5. A moist molassed beet pulp composition containing molasses and beet pulp **characterised in that** the molasses form between 20 to 60 % (w/w, dry matter) of the composition preferably from 30 to 50%, more preferably from 35 to 45 %, the moisture level in the product is from about 35 to about 60 %, preferably, between 40 and 50 %.

6. An animal feed composition containing moist molassed beet pulp according to claim 5.
